# EUROPEAN PATENT APPLICATION

(11) **EP 1 126 451 A1**
(43) Date of publication of application: **22.08.2001**
(21) Application number: 00830106.1
(22) Date of filing: 15.02.2000
(51) Int. Cl.: G11B 19/02, G11B 31/00, G06F 15/02, G06F 17/30, G06F 3/00, G11B 33/10

(54) **Hand-held book format device for reading texts stored on magnetic, optical or magnetooptical supports**

(71) Applicant: LUCERNONI, Fabrizio, I-00136 Roma (IT)
(72) Inventor: LUCERNONI, Fabrizio, I-00136 Roma (IT)
(74) Representative: Sarpi, Maurizio

(57) **Abstract**

A hand-held device for reading texts stored in electronic digital format, characterized in that it consists of a case (A, A1 and A2) with small thickness including a screen on which a page of the text stored on a magnetic, optical or magnetooptical support contained in the same case is displayed under the control of the user.

Said case (A) includes: a liquid crystal display (1) with touch screen; a processor (2) provided with a software for managing and controlling the whole device; a control keyboard (3); a compact disk (CD) reader (4); and a power supply cell (5).

The CD reader (4) is any reader of magnetic, optical or magnetooptical support of the known type (CD-R, CD-RW, DVD, smart card, sim card, hard disk, etc.) able to store data that are read and shown on display (1) for the user.

## Description

The present invention relates to reading both for taking recreation and for study or work reasons.

It is well known that books, even if useful and interesting, take up much room in the shelves and become a receptacle of dust in a short time. Unfortunately many books are removed too frequently from our own shelves and stacked in boxes that are then stored in box-rooms, lofts, cellars, all of them uncomfortable to be reached. This deprives the reader of his freedom and pleasure of having books at his disposal in a little room so that they can be easily managed without accumulating dust.
In recent years publications of books, encyclopaediae, atlas, and literary works in electronic, multimedia format on CD-ROM have been spread. However, the consultation of such publications requires necessarily the use of a top-desk or portable PC, which is not comfortable to be used in armchair, bed or on a trip, where the books are more frequently read.

The main object of the invention is then to overcome the above-mentioned problems by providing a hand-held, easy-to-manage electronic device which allows the user to read the books stored according to an electronic digital format so that they can be read in a quite similar form as the normal printed books keeping the traditional way of reading essentially unchanged.
This has been accomplished by providing a hand-held device with essentially the same size as a book and provided with a flat display on which a page of the book which is being read appears under the control of the reader, the page being stored on a magnetic, optical or magnetooptical support within the device which can be replaced and/or written again.

A better understanding of the invention will result from the following detailed description with reference to the accompanying drawings that show some preferred embodiments thereof only by way of a not limiting example.
In the drawings:

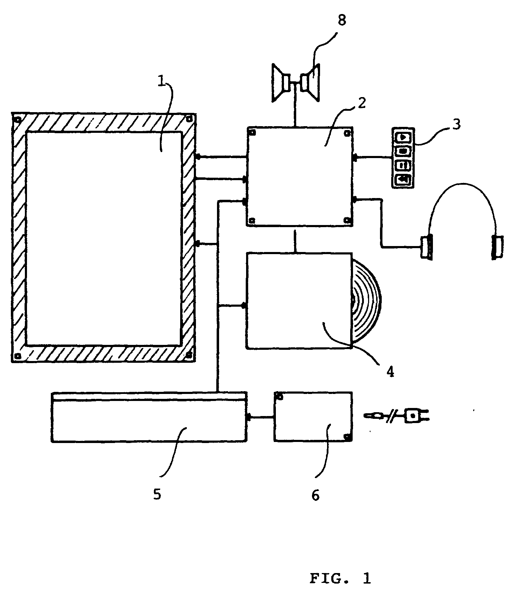

Fig. 1 is a block diagram showing the main parts of the device;
Fig. 2 shows a first embodiment of the invention; and
Fig. 3 shows a second embodiment of the invention.

The device for reading books stored on magnetic, optical or magnetooptical supports according to the present invention includes in combination the following means allowing a text to be read like a normal book:
- a liquid crystal display 1 with touch screen;
- a processor 2 provided with a software for managing and controlling the whole device;
- a control keyboard 3;
- a compact disk (CD) reader 4;
- a power supply cell 5.

According to a first embodiment all of such means are arranged in a case A having essentially a parallelepiped shape and a small thickness.

It should be noted that such CD reader 4 can be any reader of magnetic, optical or magnetooptical support of the known type (CD-R, CD-RW, DVD, smart card, sim card, hard disk, etc.) as such supports have only the function of storing data that are read and shown on display 1 for the user.

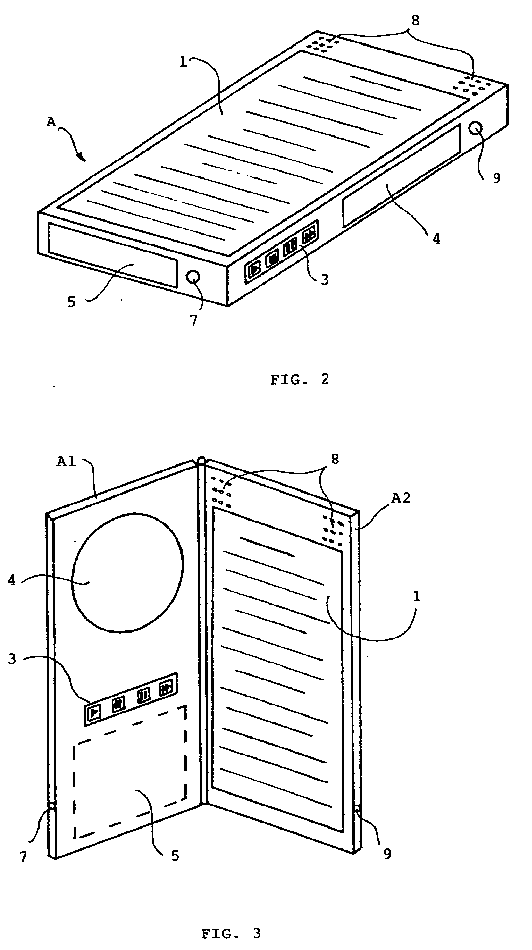

In such first embodiment shown in Fig. 2, reader 4 is located under display 1, and compact disk is put into its housing parallel to the screen.

Advantageously, the stored data can include not only alphanumeric characters but also images, sounds, film strips, etc. For such reason it is also possible to provide loudspeakers and/or a jack for headphone so that the user can listen to the sounds accompanying the images or the text which is being read.

Power supply cells 5 are preferably of the rechargeable type and can be connected to a battery charger 6 connected in turn to a socket 7.

According to a peculiar feature of the invention it is possible to interact with the system control by means of the touch screen also using any hypertext connection provided by the displayed page.

Advantageously the user can "glance through" the book by pressing a button and/or touching the screen in a similar way as with a normal printed book.

In case the compact disk also includes an audio version of the stored text, keyboard 3 also allows the device to be used as a sound player.

At last, it is advantageously possible for the device to be provided with some additional means to be also used as study or work device such as a jack for a microphone to record any comment to the text and/or a further storing unit for storing notes, comments, underlines, such as for example a PCMCIA microdrive, a floppy disk or the like. Such underlines can be made for example by a suitable pen on the touch screen.

It is self-evident from the foregoing that the invention is useful and easy to be used. The user can make virtual notes or underlines on the page he is reading or can also record data as he does by a common electronic note-book which can later be downloaded directly to a PC, for example, through an USB interface of the known type also allowing a printer to be connected for printing parts of the text, notes, etc. on sheets of paper.

Still another advantage of the disclosed hand-held device is that many volumes or even all of the works of an author, a literary period or trend may be stored, as known, on only one CD-ROM taking a very little room in comparison with that taken by the corresponding paper publications. Furthermore, the electronic format does not deteriorate in time as the books.

In a second embodiment shown in Fig. 3 the device looks like a real book having two rectangular halves Al and A2 hinged together along one long side. In this case screen 1 is located on one half A2 and the CD reading unit 4 and keyboard 3 are located on the second half. Loudspeakers 8, cell 5, and jacks 9 and 7 for headphones and power supply 6 can be located as shown in said figure or in any other way.

Among the many uses and applications of the device disclosed it is interesting to remember the possibility of providing a software capable of showing musical scores and playing the music displayed by the loudspeakers 8 or the headphone connected to jack 9, thus allowing the user to read and/or study the score on listening to the corresponding music.

The software allows the user to control the size of the text displayed on the flat screen 1 which can then be adapted to the user's need. For example, it is also possible to turn by 90° the page displayed so that the space between lines is larger, thus allowing greater characters to be used without having to scroll the text laterally but only vertically. The size of the disclosed hand-held device could be, for example, like that of an A5 sheet of paper, and the weight is approximately 200 grams.

Finally, the present invention finds a very valid application in the use at school as text-book. In fact the excessive weight of the text-books that students have to carry daily from home to school and vice versa is a well known problem connected to hardships and negative implications to the skeleton apparatus.

Such problems are fully overcome by the invention as all of the text-books of the different subjects can be stored on only one magnetic, optical or magnetooptical support that can be read by the lightweight, easy-to-manage device disclosed above. In this case the student has only to replace all of the bulky, heavy books inside his schoolbag with one hand-held device of the type disclosed so far

Again, the annual expenses for the text-books may be strongly reduced as it is sufficient to store the new text-books or to replace the compact disk carrying the texts of the preceding year at the beginning of the new year so that the student has always the updated edition at a minimum cost and delay and cost of printing is avoided.

The present invention has been described and illustrated according to preferred embodiments thereof, however, it should be understood that those skilled in the art can make equivalent modifications and/or replacements without departing from the scope of the present industrial invention.

## Claims

1. A hand-held device for reading texts stored in electronic digital format, characterized in that it consists of a case (A, A1 and A2) with small thickness including a screen on which a page of the text stored on a magnetic, optical or magnetooptical support contained in the same case is displayed under the control of the user.

2. The device of claim 1, characterized in that it includes:
- means for displaying data and/or images;
- means for controlling the device and the execution of a control software;
- means for reading data stored on the magnetic, optical or magnetooptical support;
- means for the input of the controls by the user;
- means for the power supply of the device.

3. The device of claim 1, characterized in that said case (A) includes:
- a liquid crystal display (1) with touch screen;
- a processor (2) provided with a software for managing and controlling the whole device;
- a control keyboard (3);
- a compact disk (CD) reader (4);
- a power supply cell (5).

4. The device of claim 3, characterized in that said CD reader (4) is any reader of magnetic, optical or magnetooptical support of the known type (CD-R, CD-RW, DVD, smart card, sim card, hard disk, etc.) able to store data that are shown on display (1) and read by the user.

5. The device of the preceding claims, characterized in that the stored data includes not only alphanumeric characters but also images, sounds, film strips, etc., loudspeakers (8) and/or a jack (9) for headphone being also provided so that the user can listen to the sounds accompanying the images or the text which is being read.

6. The device of the preceding claims, characterized in that power supply cells (5) are of the rechargeable type and can be connected to a battery charger (6) connected in turn to a socket (7).

7. The device of the preceding claims, characterized in that the touch screen (1) is able to interact with the system control by means of any hypertext connection provided by the displayed page.

8. The device of the preceding claims, characterized in that the user can "glance through" the book by pressing a button and/or touching the screen (1) in a similar way as with a normal printed book.

9. The device of the preceding claims, characterized in that said keyboard (3) allows the device to be used as a sound player in case the compact disk also includes an audio version of the stored text.

10. The device of the preceding claims, characterized in that in order to be used as study or work device, there is also provided a jack for a microphone to record any comment to the text and/or a further storing unit for storing notes, comments, underlines, said additional storing unit being a PCMCIA microdrive, a floppy disk or the like.

11. The device of claim 10, characterized in that said underlines are made by a suitable pen interacting with the touch screen.

12. The device of the preceding claims, characterized in that the user can make virtual notes or underlines on the page he is reading or can also record data as he does by a common electronic note-book which is later downloaded directly to a PC.

13. The device of claim 12, characterized in that notes and/or data are downloaded to a PC through an USB interface of the known type also allowing a printer to be connected for printing parts of the text, notes, etc. on sheets of paper.

14. The device of the preceding claims, characterized in that it looks like a real book having two rectangular halves (A1, A2) hinged together along one long side, screen (1) being located on one half (A2) and the CD reading unit (4) and keyboard (3) being located on the second half.
